# EUROPÄISCHE PATENTSCHRIFT

(11) **EP 0 753 421 B1**
(45) Veröffentlichungstag und Bekanntmachung des Hinweises auf die Patenterteilung: **11.04.2001**
(21) Anmeldenummer: 96108366.4
(22) Anmeldetag: 25.05.1996
(51) Int. Cl.: B60G 17/015, B60G 17/01

(54) **Radaufhängungsregelsystem**
Suspension control system
Système de réglage de suspension

(30) Priorität: 14.07.1995 DE 19525700
(43) Veröffentlichungstag der Anmeldung: 15.01.1997
(73) Patentinhaber: Bayerische Motoren Werke Aktiengesellschaft, 80788 München (DE)
(72) Erfinder: Zieglmeier, Franz, 80809 München (DE); Dettloff, Günter, 85386 Eching (DE); Jurr, Reinhold, 81247 München (DE)

(56) Entgegenhaltungen:
- EP-A- 0 465 849
- EP-A- 0 658 453
- US-A- 5 154 443

## Beschreibung

Die Erfindung bezieht sich auf ein Radaufhängungsregelsystem nach dem Oberbegriff des einzigen Patentanspruchs.

Beispielsweise aus der DE 42 21 059 A1 ist ein derartiges Radaufhängungsregelsystem bekannt, das zur Bestimmung und Einstellung eines Sollabstands zwischen dem Fahrzeugaufbau und einem Rad eines Kraftfahrzeuges zwischen Geradeausfahrt und Kurvenfahrt unterscheidet.

Um zusätzliche Sensoren zu vermeiden, sind weiterhin Radaufhängungsregelsysteme bekannt, die zur Erkennung einer Kurvenfahrt lediglich die für die Regelung ohnehin zwingend notwendigen Sensorsignale zur Erfassung des Istabstands zwischen dem Fahrzeugaufbau und einem Rad auswerten. Hierbei wird üblicherweise Kurvenfahrt erkannt, wenn die Differenz der Istabstände zwischen dem Fahrzeugaufbau und den Rädern einer Achse einen vorgegebenen Schwellwert bzw. Wankwinkel überschreitet. Da ohne zusätzlicher Sensoren, wie z. B. Lenkwinkelsensoren oder Querbeschleunigungssensoren, jede Differenz der Istabstände zwischen dem Fahrzeugaufbau und den Rädern einer Achse oberhalb des vorgegebenen Schwellwerts als Kurvenfahrt erkannt wird, kann bei manchen, insbesondere fehlerhaften Fahrzeugzuständen, die auch bei Geradeausfahrt zu derartigen Differenzen führen, fälschlicherweise eine Kurvenfahrt erkannt werden. Wird beispielsweise in der Werkstatt durch fehlerhafte Justierung des Abstands zwischen dem Fahrzeugaufbau und einem Rad eine derartige Differenz zwischen den Istabständen der Räder einer Achse vom Fahrzeugaufbau eingestellt, wird bei einem Neustart des Kraftfahrzeugs durch diesen Schiefstand von vorneherein Kurvenfahrt erkannt. Da üblicherweise während der Kurvenfahrt keine Regelung des Radaufhängungsregelsystems zum Aufrichten der geneigten Fahrzeugseite durchgeführt wird, wird dieser Schiefstand nicht korrigiert. Die Folge ist ein bleibender Schiefstand des Fahrzeugs während einer Geradeausfahrt und somit eine Erkennung einer Kurvenfahrt während einer Geradeausfahrt.

Es ist Aufgabe der Erfindung, ein Radaufhängungsregelsystem eingangs genannter Art derart zu verbessern, daß auch ohne zusätzlicher Sensoren eine richtige Erkennung einer Geradeausfahrt und einer Kurvenfahrt möglich ist.

Diese Aufgabe wird durch die kennzeichnenden Merkmale des Patentanspruchs gelöst.
Erfindungsgemäß wird das Verhältnis der Zeitdauer einer erkannten Kurvenfahrt zur Zeitdauer einer erkannten Geradeausfahrt gebildet. Wenn dieses Verhältnis von den real auftretenden Verhältnissen, die vorzugsweise empirisch ermittelt werden, abweicht, wird die Erkennung der Geradeausfahrt und der Kurvenfahrt invertiert.

Dieser Erfindung liegt der Gedanke zugrunde, daß üblicherweise die Abschnitte einer Kurvenfahrt gegenüber einer Geradeausfahrt zeitlich kürzer sind. Wird erfindungsgemäß Kurvenfahrt erkannt, wird die Zeitdauer dieser Kurvenfahrt erfaßt. Im nächsten Schritt wird die Zeitdauer der darauffolgenden Geradeausfahrt ebenfalls erfaßt. Da in Ausnahmefällen bei manchen Fahrtstrecken vereinzelt auch längere Kurvenfahrten als Geradeausfahrten auftreten können, werden vorzugsweise mehrere Zyklen von Kurvenfahrt-und Geradeausfahrtabschnitten zeitlich erfaßt. Erkennt die Steuereinheit des Radaufhängungsregelsystems, daß im Mittel die Kurvenfahrten eine längere Zeitdauer als die Geradeausfahrten aufweisen, wird auf fehlerhafte Kurvenerkennung geschlossen und die Erkennung zwischen Kurvenfahrt und Geradeausfahrt invertiert. Hierdurch wird die zuvor fälschlicherweise durch den Schiefstand erkannte Kurvenfahrt als Geradeausfahrt gewertet. Ein Schiefstand während der Geradeausfahrt wird jedoch durch eine Regelaktivität des Radaufhängungsregelsystems korrigiert, wodurch nach einer Korrektur während der Geradeausfahrt wieder eine richtige Erkennung von Kurvenfahrt und Geradeausfahrt vorliegt.

In der Zeichnung ist ein Ausführungsbeispiel der Erfindung dargestellt. Es zeigt
- Fig. 1: eine mögliche Voraussetzung zur Erkennung einer Kurvenfahrt und
- Fig. 2: eine mögliche Vorgehensweise um die Zeitdauer einer Kurvenfahrt und einer Geradeausfahrt zu erfassen und deren Verhältnis zu ermitteln.

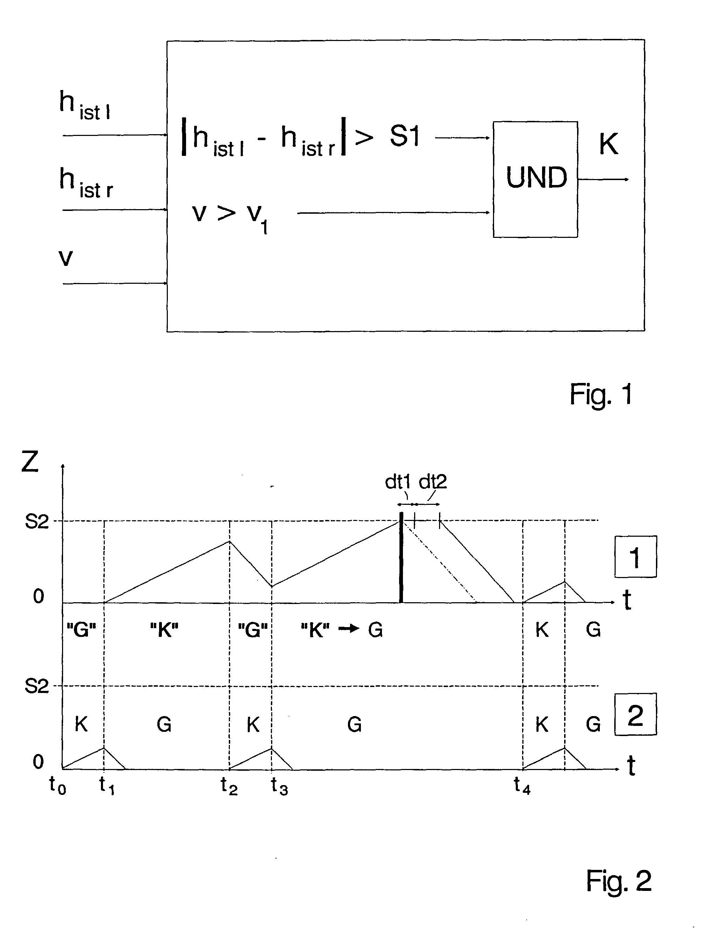

Fig. 1 zeigt ein Steuergerät eines hier nicht dargestellten Radaufhängungsregelsystems, das u. a. die Signale zur Erfassung des Istabstands h_{ist I} zwischen dem Fahrzeugaufbau und dem linken Rad einer Achse und des Istabstands h_{ist r} zwischen dem Fahrzeugaufbau und dem rechten Rad einer Achse sowie zur Erfassung der Fahrzeuggeschwindigkeit v als Eingangssignale erhält. Da eine Erkennung der Kurvenfahrt und damit eine Regelverhinderung des Radaufhängungsregelsystems nur bei höheren Geschwindigkeiten zur Erhöhung der Querstabilität vorgenommen werden soll, wird die Fahrzeuggeschwindigkeit v mit einem vorgegebenen Wert v₁ verglichen. Darüber hinaus wird die Differenz zwischen den Istabständen h_{ist I} und h_{ist r} zwischen dem Fahrzeugaufbau und den Rädern einer Achse gebildet und deren Betrag mit einem vorgegebenen kurvenbezogenen Schwellwert S1 verglichen. Liegt diese Differenz oberhalb des Schwellwertes S1 und ist die Fahrzeuggeschwindigkeit v größer als der vorgegebene Wert v₁, wird Kurvenfahrt K erkannt. Liegt eine der beiden Bedingungen nicht vor, wird Geradeausfahrt G erkannt.

In Fig. 2 ist im oberen Diagramm der Fall 1 dargestellt, in dem zunächst fälschlicherweise Kurvenfahrt "K" während einer Geradeausfahrt G aufgrund eines fehlerhaften Schiefstands des Kraftfahrzeugs erkannt wird. Im unteren Diagramm der Fig. 2 ist im Fall 2 eine von vorneherein richtige Erkennung einer Kurvenfahrt und einer Geradeausfahrt gegenübergestellt.

Wie im Fall 2 richtig erkannt, beginnt zum Zeitpunkt t₀ eine Kurvenfahrt K. Im Fall 1 wird fälschlicherweise Geradeausfahrt "G" erkannt, da sich beispielsweise die Kurve in eine Richtung entgegen der Schiefstandsneigung erstreckt. Zum Zeitpunkt t₁ geht die Kurvenfahrt K tatsächlich wieder in eine Geradeausfahrt G über, während im Fall 1 nun durch den Schiefstand während der Geradeausfahrt G eine Kurvenfahrt "K" erkannt wird.

Die Zeitdauer einer erkannten Kurvenfahrt wird durch Erhöhen der Zahl Z eines Zählers erfaßt, während die Zeitdauer der Geradeausfahrt durch Erniedrigen der Zahl Z des Zählers ermittelt wird. Vorzugsweise wird die Zahl Z, wie in Fig. 2 dargestellt, bei Erkennung der Geradeausfahrt schneller erniedrigt als bei Erkennung einer Kurvenfahrt die Zahl Z erhöht wird. Hierdurch kann ein bestimmtes Verhältnis der Zeitdauer der Kurvenfahrt zur Zeitdauer der Geradeausfahrt definiert werden. Erreicht die Zahl Z des Zählers eine Schwelle S2 wird angezeigt, daß das Verhältnis der Zeitdauer der Kurvenfahrt zur Zeitdauer der Geradeausfahrt von den real auftretenden Verhältnissen abweicht. Erreicht also die Zahl Z die Schwelle S2 wird die Erkennung der Kurvenfahrt und der Geradeausfahrt invertiert.

Geht zum Zeitpunkt t₂ im Fall 1 die fälschlicherweise erkannte Kurvenfahrt "K" in eine fälschlicherweise erkannte Geradeausfahrt "G" über, wird die Zahl Z ausgehend von dem Wert, der am Ende der Geradeausfahrt G bzw. der fälschlicherweise erkannten Kurvenfahrt "K" vorliegt, dekrementiert. Am Ende der fälschlicherweise erkannten Geradeausfahrt "G" bzw. am Ende des kurzen Kurvenabschnitts K zum Zeitpunkt t₃ hat die Zahl Z des Zählers den Wert 0 noch nicht erreicht. Wechselt zum Zeitpunkt t₃ daraufhin die Kurvenfahrt K wieder in eine Geradeausfahrt G über, wird wieder fälschlicherweise Kurvenfahrt "K" erkannt und daraufhin der Zähler Z ausgehend von dem Wert, der am Ende der fälschlicherweise erkannten Geradeausfahrt "G" vorlag, inkrementiert. Die Geradeausfahrt G zwischen dem Zeitpunkt t3 und t₄ dauert solange an, daß vor Ende dieser Geradeausfahrt G zum Zeitpunkt t₄ die Zahl Z den Schwellwert S2 erreicht. Zum Zeitpunkt der Schwellwertüberschreitung wird die Erkennung der Geradeausfahrt und der Kurvenfahrt invertiert. Daraufhin wird anstelle der fälschlicherweise erkannten Kurvenfahrt "K" die Erkennung der Geradeausfahrt G richtigerweise ersetzt. Sobald Geradeausfahrt G erkannt wird, wird das Radaufhängungsregelsystem zumindest nach einer definierten Zeitspanne dt1 aktiviert, um den nun erkannten Schiefstand auszuregeln. Nach einer Zeitspanne dt2 ist der Schiefstand ausgeregelt. Durch die nunmehr richtige Erkennung der Geradeausfahrt G wird die Zahl Z ausgehend von der Schwelle S2 wieder dekrementiert. Alternativ (vgl. strichpunktierte Linie) kann die Zahl Z bereits zum Zeitpunkt des Invertierens der Erkennung von Kurven- und Geradeausfahrt dekrementiert werden. Zum Zeitpunkt t₄ stimmen Fall 1 und Fall 2 in beiden Fällen überein.

Dieses Ausführungsbeispiel zeigt ein besonders einfaches Verfahren zur Messung der Zeitdauer der Kurvenfahrt und der Zeitdauer der Geradeausfahrt sowie zur Bildung und Bewertung des Verhältnisses dieser beiden Größen.

## Patentansprüche

1. Radaufhängungsregelsystem für Kraftfahrzeuge mit Mitteln zum Einstellen eines Sollabstandes zwischen dem Fahrzeugaufbau und einem Rad sowie mit Mitteln zur Erkennung einer Geradeausfahrt und zur Erkennung einer Kurvenfahrt, dadurch gekennzeichnet, daß die Zeitdauer einer erkannten Kurvenfahrt ("K") und die Zeitdauer einer erkannten Geradeausfahrt ("G") zumindest für einen Zyklus von Kurvenfahrt- und Geradeausfahrtabschitten erfaßt werden und daß das Ergebnis der Erkennung von Kurvenfahrt in Geradeausfahrt und von Geradeausfahrt in Kurvenfahrt umgekehrt wird, wenn im Mittel die erkannten Kurvenfahrten eine längere Zeitdauer aufweisen als die erkannten Geradeausfahrten.

## Claims

1. A wheel suspension adjustment system for motor vehicles comprising means for obtaining a set distance between the vehicle body and a wheel and means for identifying travel straight ahead and for identifying travel round a bend, **characterised in that** the duration ("K") of identified travel round a bend and the duration ("G") of identified travel straight ahead is determined during at least one cycle of distances travelled round the bend and straight ahead, and the resulting identification is changed from travel round the bend to travel straight ahead or from travel straight ahead to travel round a bend if the travel identified as round a bend lasts longer on average than the travel identified as straight ahead.

## Revendications

1. Système de réglage de la suspension des roues d'un véhicule, comportant des moyens pour régler un espacement théorique entre la structure du véhicule et une roue, ainsi que des moyens pour reconnaître une circulation en ligne droite et une circulation en courbe,
caractérisé en ce que
la durée d'une circulation reconnue être en courbe ("K") et la durée d'une circulation reconnue être en ligne droite ("G") sont saisies au moins pendant un cycle de sections de parcours en courbe et de sections de parcours en ligne droite, le résultat de la reconnaissance étant inversé d'une circulation en courbe à une circulation en ligne droite et d'une circulation en ligne droite à une circulation en courbe si, les parcours reconnus en courbe présentent en moyenne une durée plus longue que les parcours reconnus en ligne droite.
